# EUROPÄISCHE PATENTSCHRIFT

(11) **EP 2 937 494 B1**
(45) Veröffentlichungstag und Bekanntmachung des Hinweises auf die Patenterteilung: **07.06.2017**
(21) Anmeldenummer: 14001493.7
(22) Anmeldetag: 25.04.2014
(51) Int. Cl.: E04H 12/12, E04H 12/18, E04H 12/34, F03D 13/20

(54) **Segment aus einem Halbzeug zur Herstellung eines Turms einer Windkraftanlage**
Segment with a semi-finished product for the assembly of a wind power tower
Segment avec un semi-produit pour la fabrication d'une éolienne

(43) Veröffentlichungstag der Anmeldung: 28.10.2015
(73) Patentinhaber: Fullmann, Robert, 53474 Bad Neuenahr-Ahweiler (DE); Schemmann, Thilo, 48153 Münster (DE)
(72) Erfinder: Füllmann, Robert, 53474 Bad Neuenahr-Ahrweiler (DE); Schemmann, Thilo, 48153 Münster (DE)
(74) Vertreter: Tilmann, Max Wilhelm

(56) Entgegenhaltungen:
- EP-A2- 1 889 988
- WO-A1-92/01850
- AT-A4- 513 261
- US-A- 5 038 540

## Beschreibung

Die Erfindung betrifft ein Segment für die Herstellung einer Außenwand eines Turms, einen Turm mit einem solchen Segment und eine Verwendung eines solchen Turms. Insbesondere bevorzugt wird unter dem Begriff "Turm" ein Turm oder Turmbauwerk einer Windkraftanlage oder Windturbine verstanden.

Es ist bekannt, Türme von Windkraftanlagen aus Fertigbeton-Bauteilen herzustellen. Beispielsweise können ringförmige Betonfertigteile auf einem Fundament übereinandergesetzt und miteinander verbunden werden, so dass jedes ringförmige Betonfertigteil einen Bereich des Turms entlang dessen Längserstreckung bildet. Ein derartiger Turm kann durch die Verwendung der Betonfertigteile weitgehend vorgefertigt und am Aufstellungsort des Turms schnell aufgebaut werden. Dies ermöglicht eine wirtschaftliche Herstellung eines Turms, lässt jedoch keinen flexiblen Spielraum bezüglicher der Abmessungen des Turms in seiner Höhe und seines Durchmessers zu. Außerdem bestehen je nach Dimensionierung des ringförmigen Betonfertigteils erhöhte Transportaufwendungen bei der Anlieferung des Betonfertigteils an den Aufstellungsort.

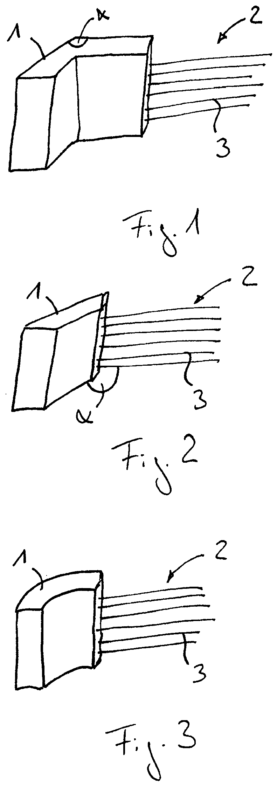

Es sind Querschnittsgeometrien von Türmen bekannt, die vier jeweils geradlinige (ebene) Abschnitte aufweisen, bei denen die benachbarten Abschnitte jeweils im Winkel von 90° zu einander stehen und über Eckabschnitte miteinander verbunden sind. Beispielsweise zeigt Fig. 2 der DE 10 2009 014 926 A1 eine solche Querschnittsgeometrie mit eben ausgeführten Eckabschnitten, die im Winkel von ca. 45° zu den Abschnitten angeordnet sind, die sie verbinden. Ebenso zeigt WO 2008/110309 A1 in der Fig. 1A eine solche Querschnittsgeometrie, wobei die dortige Fig. 1A dort mehrere in Längsrichtung des Turms aufeinanderfolgende Bereiche zeigt und bei dem in der dortigen Fig. 1A gezeigten, obersten Bereich die geradlinigen (ebenen) Abschnitte bereits sehr geringe Längserstreckungen (Erstreckung in Umfangsrichtung des Turms) haben und durch größere, bogenförmige Eckabschnitte miteinander verbunden werden. WO 92/01850 A1 beschreibt ein Segment laut Oberbegriff des Anspruchs 1.

Aufgabe der vorliegenden Erfindung ist es, einen Turm, insbesondere für eine Windkraftanlage oder Windturbine einfach, an vorbestimmte Erfordernisse angepasst sowie wirtschaftlich günstig herzustellen.

Diese Aufgabe wird gelöst durch den Gegenstand der nebengeordneten Patentansprüche. Vorteilhafte Weiterentwicklungen sind Gegenstand der jeweiligen Unteransprüche.

Der Erfindung liegt der Gedanke zugrunde, für die Herstellung der Außenwand eines Turms ein Halbzeug für die Herstellung eines Segments zu verwenden, das in hoher Stückzahl vorgefertigt werden kann, wobei das Halbzeug einen Beton-Abschnitt und einen Abschnitt aufweist, in dem die Armierung zumindest teilweise exponiert vorliegt. Auf diese Weise ist es möglich, zumindest einen Abschnitt, der eventuell hinsichtlich des Gießens höhere Anforderungen stellt als andere Abschnitte, vorzufertigen. Beispielsweise kann ein in seiner Herstellung schwierigerer Abschnitt, der vorzugsweise eine Krümmung und/oder Winkelung der Außenwand des Turms beinhaltet, als Beton-Abschnitt vorgefertigt werden. Ein sich an den gekrümmten bzw. winkeligen Abschnitt anschließender, einfacher zu gießender Abschnitt, insbesondere ein geradliniger (ebener) Abschnitt, muss nicht im Rahmen der Erstellung des Halbzeugs vorgefertigt werden. Ebene Abschnitte lassen sich auch mit einfachen Mitteln aus Beton an einen bestehenden Beton-Abschnitt angießen.

In dem einfacher zu gießenden Abschnitt ist bei dem zur Herstellung des erfindungsgemäßen Segments einzusetzenden Halbzeug die Armierung zumindest teilweise exponiert und bereitet somit die Fertigstellung des Segments durch Angießen des Abschnitts an den bestehenden Beton-Abschnitt vor.

Die Armierung kann aus dem gegossenen Beton-Abschnitt herausgeführt werden, wobei insbesondere der geradlinige Abschnitt des Segments, bei der Vorfertigung des Halbzeugs zunächst im Wesentlichen betonfrei verbleiben kann. Insbesondere kann die Armierung in dem Abschnitt endseitig exponiert sein. Die Erfinder haben erkannt, dass ein derartiges Halbzeug zu geringeren Transportkosten führt, da das Halbzeug ein geringeres Volumen einnimmt, als ein aus dem Halbzeug hergestelltes Segment.

Auch bietet das erfindungsgemäße Halbzeug bei bestimmten Querschnittsgeometrien von Türmen den Vorzug einer standardisierbaren Herstellung des Halbzeugs. Es sind Querschnittsgeometrien von Türmen bekannt, die vier jeweils geradlinige (ebene) Abschnitte aufweisen, bei denen die benachbarten Abschnitte jeweils im Winkel von 90° zu einander stehen und über Eckabschnitte miteinander verbunden sind. Bei solchen Querschnittsgeometrien kann zumindest die Herstellung der Segmente eines einen Bereich des Turms entlang dessen Längserstreckung standardisiert werden, in dem die Eckabschnitte gleich ausgelegt werden und in Form der Beton-Abschnitte des zur Herstellung des erfindungsgemäßen Segments einzusetzenden Halbzeugs vorgefertigt werden. Die sich daran jeweils anschließenden geradlinigen (ebenen) Abschnitte können dann zu einem späteren Zeitpunkt gegossen werden. In besonderer Weiterbildung dieser Turmformen sind Bauformen bekannt, bei denen die Eckabschnitt eine Mehrzahl der in Längsrichtung des Turms aufeinanderfolgende Bereiche gleich ausgebildet werden, wie dies beispielsweise in WO 2008/110309 A1 anhand deren Fig. 1 beschrieben wird. Bei derartigen Türmen kann die Herstellung der Segmente noch weiter standardisiert werden. Da alle Eckabschnitte der relevanten Bereiche gleich sind, können alle Segmente aus dem gleichen, den Eckabschnitt als Beton-Abschnitt des erfindungsgemäßen Halbzeugs aufweisenden Halbzeug hergestellt werden, wobei zur Anpassung an die Querschnittsgeometrie des jeweiligen Bereichs des Turms entlang seiner Längserstreckung lediglich der an den Beton-Abschnitt anzugießende Abschnitt angepasst werden muss. Dies kann beim Angießen des Beton-Abschnitts am Aufstellungsort oder in der Nähe des Aufstellungsort erfolgen.

Somit bietet das zur Herstellung des erfindungsgemäßen Segments einzusetzenden Halbzeug auch den Vorteil, dass es vor Ort noch flexibler derart eingesetzt werden kann, wenn man berücksichtigt, dass die Armierung entsprechend den Vorgaben vor Ort gekürzt und ein Segment hergestellt werden kann, bei dem ein in seiner Länge und/oder Geometrie angepasster Abschnitt angegossen werden kann. Ein relativ schwierig zu erstellender Abschnitt des Segments kann damit vorgelagert vorgefertigt werden und ein einfacher zu gießender Abschnitt vor Ort bei der Errichtung des Turms flexibel angegossen werden. Durch das Vorliegen der Armierung, die sich aus dem vorgefertigten Beton-Abschnitt erstrecken kann, ergibt sich eine hohe Festigkeit des Segments. Damit wird eine hohe Wirtschaftlichkeit in Bezug auf die Transportkosten, eine hohe Flexibilität im Hinblick auf eine Variabilität der vorgefertigten Halbzeuge und ein einfacher Aufbau erreicht.

Im Sinne der Erfindung umfasst der Begriff "Armierung" jegliche Art von Bewehrung in Form von Kunststoff- oder Glasfasern, insbesondere Stahlfasern, Stahlstäben und/oder Stahlgeflechten.

Im Sinne der Erfindung umfasst der Begriff "Segment" ein Bauelement eines Turms, das insbesondere einstückig gehandhabt werden kann. Das Segment kann einen Abschnitt einer ringförmigen Außenwand des Turms bilden.

Der Begriff "Längsrichtung" bezieht sich insbesondere bei solchen Segmenten, bzw. Halbzeugen, die einen sich geradlinig (eben) erstreckenden Abschnitt haben, an den sich ein nicht geradliniger oder ein sich zumindest teilweise winkelig oder gebogen von dem Abschnitt fort erstreckender Beton-Abschnitt anschließt, auf die Längsachse des Abschnitts. Diese Längsachse entspricht häufig einer Umfangsrichtung des Turms.

Da der nicht-geradlinige Bereich der Außenwand eines Turms in der Regel schwieriger zu gießen ist als ein geradliniger Abschnitt, ist in einer bevorzugten Ausführungsform der vorgefertigte Beton-Abschnitt des Halbzeugs nicht-geradlinig geformt. Der Beton-Abschnitt kann insbesondere in Längsrichtung nicht geradlinig geformt sein. Unter dem Begriff "nicht geradlinig" geformt, wird insbesondere eine kreisbogensegment-förmige Krümmung aus der Längsrichtung heraus, eine in dem Abschnitt vorhandener Winkel zu der Längsrichtung und/oder ein Versatz in Längsrichtung verstanden. Der Beton-Abschnitt kann in nächster Nähe zum Abschnitt teilweise geradlinig ausgebildet sein, da dies den Übergang zum Abschnitt, insbesondere das Angießen des Abschnitts vereinfacht.

In einer bevorzugten Ausführungsform weist der Beton-Abschnitt eine Querschnittsfläche in Form eines Trapezes auf, um die Möglichkeit einer einfachen geometrischen Verjüngung des herzustellenden Turms zu ermöglichen. Der erfindungsgemäß gebrauchte Begriff "Trapez" umfasst ein Viereck mit zwei parallel zueinander liegenden Seiten. Zwei der Seiten des Trapezes weisen einen Winkel zu den parallel zueinander liegenden Seiten auf, der gleich oder verschieden für die beiden nicht parallel zueinander verlaufenden Seiten sein kann. In einer bevorzugten Ausführungsform verlaufen auch die anderen beiden Seiten im Wesentlichen parallel zueinander. Hierdurch kann ein besonders einfacher Aufbau des Halbzeugs mit einer einfachen Verschalung für den Beton-Abschnitt erreicht werden. Bezogen auf die Einbaulage des Segments kann die trapezförmige Querschnittsfläche in einer Ebene senkrecht zu einer Horizontalen, vorzugsweise zu einer in eine Umfangsrichtung des Turms weisenden Horizontalen ausgebildet sein und/oder in einer Ebene senkrecht zu einer Vertikalen.

In einer weiteren bevorzugten Ausführungsform ist der Abschnitt, in dem die Armierung zumindest teilweise exponiert ist, länger als der Beton-Abschnitt, sodass sich die Vorfertigung auf schwieriger zu gießende Abschnitte beschränken und das Gewicht des Halbzeugs geringer sein kann, was die Handhabung desselben vereinfacht. Die Vorfertigung des Halbzeugs kann sich in Bezug auf das Gießen des Betons nur auf einen in Umfangsrichtung gekrümmten und/oder gewinkelten Abschnitt für den Turm erstrecken. Die geradlinigen Abschnitte in Längsrichtung des sich nachher ergebenden Segments bzw. in Umfangsrichtung des Turms können vor Ort nahe bei dem Aufstellungsort des Turms angegossen werden.

Die Armierung kann sich im Wesentlichen geradlinig von dem Beton-Abschnitt erstrecken. Es kann jedoch auch vorgesehen sein, dass ein Winkel und/oder eine Krümmung der sich vom dem Beton-Abschnitt erstreckenden Armierung vorgesehen ist. Es ist auch möglich, dass eine Winkelung oder Krümmung der Armierung im Abschnitt, in dem die Armierung zumindest teilweise exponiert ist, vorliegt. Die Krümmung und/oder Winkelung der Armierung kann in Längsrichtung und/oder quer zu dieser vorliegen.

Die Erfindung schafft ein Segment, das aus einem Halbzeug für die Herstellung eines Segments für eine Außenwand eines Turms hergestellt ist, bei dem zwei Bereiche vorhanden sind, die zu unterschiedlichen Zeitpunkten gehärteten Beton umfassen. Dies trägt der Eigenschaft des Halbzeugs Rechnung, dass mindestens ein Bereich vorgesehen ist, der zumindest teilweise eine exponierte Armierung hat, wo Beton, insbesondere vor Ort am Aufstellungsort des Turms, angegossen werden kann.

Das Segment weist eine nicht ebene Auflagefläche auf. Hierdurch kann erreicht werden, dass eine Struktur am Segment vorgesehen ist, die zu einer Verzahnung aufeinander liegender Segmente führen kann, welche eine erhöhte Stabilität aufeinander liegender Segmente ergeben kann. Die nicht ebene Auflagefläche ist in Form von mindestens zwei stufenförmig versetzen Auflageflächen ausgestaltet. Zwischen den Auflageflächen kann eine Versatzfläche angeordnet sein, die jeden beliebigen Winkel zu den Auflageflächen haben kann. Beispielsweise kann ein mit einer Auflagefläche eingeschlossener Winkel im Bereich von 50° bis 130°, bevorzugt 60° bis 120°, insbesondere bevorzugt 70° bis 110° liegen. In einer besonders bevorzugten Ausführungsform weist das eine nicht ebene Auflagefläche aufweisende Segment auch eine nicht ebene nach oben gerichtete Fläche auf, die im Wesentlichen parallel zur Auflagefläche ist und eine Oberfläche bildet zum Auflegen weiterer, insbesondere im Wesentlichen gleich gestalteter, Segmente, die ihrerseits eine nichtebene Auflagefläche aufweisen können.

Ein Segment für die Herstellung einer Außenwand eines Turms, insbesondere eines Turms für eine Windkraftanlage oder Windturbine, kann einen im Wesentlichen geradlinigen Abschnitt und einen an den im Wesentlichen geradlinigen Abschnitt anschließenden Abschnitt aufweisen, der ein Ende umfasst, das aus der Ebene des im Wesentlichen geradlinigen Abschnitts versetzt ist. Insbesondere kann ein Segment geschaffen werden, dass zwei Abschnitte aufweist, von denen eines geradlinig in Längsrichtung ausgestaltet ist und an den sich ein gekrümmter und/oder gewinkelter Abschnitt und/oder einen Winkel zum geradlinigen Abschnitt einschließender Abschnitt anschließt. Das Segment kann insbesondere in einer Aufsicht L-förmig und/oder in Form eines Hockey-Schlägers ausgestaltet sein. Es kann vorgesehen sein, dass das Segment endseitig an zumindest einem Ende nicht rechtwinklig in Bezug auf die Längsachse ist. Hierdurch kann eine weitere Erhöhung der Stabilität erreicht werden. Vorzugsweise können die Segmente an ihren beiden Enden entsprechend ausgebildet werden, sodass an beiden Enden gleiche Winkel vorliegen. Es ist auch möglich, dass das Segment eine nichtebene Auflagefläche aufweist.

Die Verwendung des Halbzeugs für die Herstellung der Segmente für die Außenwand eines Turms führt zu einem Turm, der Segmente für die Außenwand des Turms aufweist, die zu unterschiedlichen Zeiten gehärteten Beton umfassen.

Die Segmente für die Außenwand des Turms weisen mindestens einen stufenartigen Versatz auf, wodurch die Stabilität des Turms erhöht werden kann. Der stufenartige Versatz kann in einer nichtebenen Auflagefläche ausgestaltet sein, die in einer nichtebenen nach oben gerichteten Oberfläche eine Entsprechung in Form eines im Wesentlichen parallelen Verlaufs der Auflagefläche und der nach oben gerichteten Oberfläche vorliegen kann. Der stufenförmige Versatz bietet insbesondere bei hohen Türmen den Vorteil einer erhöhten Torsionssteifigkeit.

Die Erfinder haben erkannt, dass ein Turm geschaffen werden kann, bei dem im Wesentlichen gleiche Segmente in einer (Höhen-)Lage des Turms verwendet werden können, die im Wesentlichen gleichen Segmente demnach zusammengefügt werden, um einen Bereich des Turms entlang dessen Längserstreckung zu bilden. Es ist sogar möglich, dass ein gekrümmter oder gewinkelter Abschnitt für Segmente in unterschiedlichen Lagen gleich ausgeführt sein kann, während die Länge eines geradlinigen Abschnitts mit zunehmender Höhe des Turms kürzer ist. Bei den Segmenten kann es sich um im Wesentlichen gleiche Segmente handeln, was die Handhabung der Segmente vereinfachen kann, da diese untereinander austauschbar sind und keine vorgegebene Reihenfolge unterschiedlich ausgestalteter Segmente beachtet werden muss. Beispielsweise können auch im Wesentlichen gleiche Segmente verwendet werden, selbst wenn die Segmente in direkt aufeinanderfolgenden Lagen in Umfangsrichtung versetzt zueinander angeordnet werden sollten. Ebenso können in einer Lage erste Segmente verwendet werden und in der darauffolgenden Lage Segmente, die zu den ersten Segmenten spiegelbildlich ausgeführt sind. Die Segmente können zwei stufenartige Versätze an Auflagefläche und entgegengesetzter Fläche aufweisen, damit die Segmente bei einer Drehung um 180° um eine Längsachse versetzt zueinander aufeinander geschichtet werden können.

Die Segmente können zur Bildung des Turms miteinander mit Beton vergossen werden, verklebt, verschraubt oder anderweitig mechanisch miteinander verbunden werden.

Es kann ein Turm geschaffen werden, in dem ein Umfang des Turms mindestens 3 miteinander verbundene, insbesondere gleiche, Segmente aufweist. Die Handhabung dieser Segmente für einen Umfang ist überschaubar und liefert zugleich auch die Möglichkeit einer entsprechenden Flexibilität in Bezug auf mögliche Ecken bzw. Segmente eines Turms, sodass jedes Segment einen Winkelbereich des Umfangs von im Wesentlichen 90° überstreichen kann.

In einer bevorzugten Ausführungsform sind die mindestens 3 miteinander verbundenen Segmente eines Umfangs zu dem nächsten benachbarten Umfang in Umfangsrichtung versetzt zueinander angeordnet. Hierdurch wird ermöglicht, dass eine Lage aus Segmenten für einen Umfang stabiler mit dem nachfolgenden Umfang aufgebaut werden kann. Ein Segment einer nachfolgenden Lage kann sich dabei vorzugsweise über die Fuge zweier darunterliegender Segmente erstrecken. Dieser Aufbau ist auch insbesondere bei nahezu gleich aufgebauten Segmenten möglich, sofern die zwei Abschnitte eines Segments unterschiedliche Länge in Umfangsrichtung aufweisen.

In einer bevorzugten Ausführungsform weist der Turm in Richtung seiner Längserstreckung mehrere Bereiche (Lagen) auf, wobei zumindest eine der Lagen aus Segmenten, insbesondere bevorzugt den erfindungsgemäßen Segmenten aufgebaut ist. Insbesondere bevorzugt ist die Lage nur durch Segmente und für die Verbindung der Segmente untereinander notwendige Elemente, wie beispielsweise Verbindungsschrauben und in möglicherweise vorhandene Fugen einzubringendes Dichtmaterial gebildet. In einer bevorzugten Ausführungsform weist der Turm mehr als zwei, insbesondere bevorzugt mehr als 3, insbesondere bevorzugt mehr als 5 und vor allem mehr als 10 derartiger Lagen auf.

In einer bevorzugten Ausführungsform weist eine Lage eine Höhe von ca. 4 m auf. Eine solche Lage kann aus Segmenten hergestellt werden, die aus Halbzeugen hergestellt wurden, die sich verhältnismäßig gut transportieren lassen, wenn sie nämlich eine Höhe des Beton-Abschnitts von ca. 4 m haben und diese Abmessung die größte Abmessung des Beton-Abschnitts ist. Der erfindungsgemäße Turm kann beispielsweise eine Höhe von 80 m haben. Ein derartiger Turm kann beispielsweise aus 20 Lagen, die aus erfindungsgemäßen Segmenten aufgebaut sind, zusammengesetzt werden.

In einer bevorzugten Ausführungsform weist der Turm eine Querschnittgeometrie auf, die mindestens 3, insbesondere bevorzugt 4 geradlinige (ebene) Abschnitte aufweist, bei denen die benachbarten Abschnitte jeweils im Winkel von 120° (bei 3 Abschnitten), bzw. von 90° (bei 4 Abschnitten) zueinander stehen und über Eckabschnitte (beispielsweise als Eckabschnitte ausgebildete Beton-Abschnitte des erfindungsgemäßen Halbzeugs) miteinander verbunden sind. In einer bevorzugten Ausführungsform sind die Eckabschnitte der Segmente einer Lage gleich ausgelegt. Insbesondere bevorzugt sind die Eckabschnitte der Segmente aufeinanderfolgender Lagen des Turms gleich ausgelegt, wie dies beispielsweise in WO 2008/110309 A1 anhand deren Fig. 1 beschrieben wird.

Bei einem Verfahren zum Herstellen eines Turms werden vorgefertigte Halbzeug-Segmente verwendet, die einen Beton-Abschnitt umfassen, der einen Abschnitt der Außenwand des Turms aufweist und zumindest eine teilweise exponierte Armierung aufweist. Die Halbzeug-Segmente werden nahe zum Aufstellungsort des Turms transportiert. Die Transportkosten sind aufgrund des geringeren Gewichts niedriger und die Halbzeug-Segmente können vor Ort nahe dem Aufstellungsort des Turms aufgrund des Vorliegens von exponierter Armierung in einem Abschnitt vereinfacht verändert werden. Bei dem Verfahren wird unter Einsatz von Beton ein Abschnitt unter Einschluss der exponierten Armierung an dem Beton-Abschnitt angegossen.

In einer bevorzugten Ausführungsform kann die Armierung des Abschnitts des vorgefertigten Halbzeug-Segments vor der Erzeugung des Segments in seiner Länge angepasst werden. Insbesondere kann hier auf den Umstand eines sich nach oben hin verjüngenden Turms durch eine Verkürzung der Armierung und eine Verkürzung des geradlinigen Abschnitts in der Höhe eingewirkt werden.

Bevorzugt werden in aufeinander liegenden Lagen die Segmente in unterschiedlichen Richtungen aufeinander gelegt, wodurch Segmente in aufeinanderfolgenden Lagen sich zwischen den Fugen der nächsten betrachteten Lage erstrecken können. Insbesondere sind die Segmente einer nachfolgenden Lage um 180° um die Horizontale gedreht relative zu den Segmenten der vorherigen Lage.

Die Erfindung wird nachfolgend anhand von in den Zeichnungen dargestellten Ausführungsbeispielen näher erläutert.

In den Zeichnungen zeigt:
- Fig. 1: ein erstes Ausführungsbeispiel eines erfindungsgemäßen Halbzeugs für die Herstellung eines Segments für eine Außenwand eines Turms in perspektivischer Ansicht;
- Fig. 2: ein zweites Ausführungsbeispiel eines erfindungsgemäßen Halbzeugs für die Herstellung eines Segments für eine Außenwand eines Turms in perspektivischer Ansicht;
- Fig. 3: ein drittes Ausführungsbeispiel eines erfindungsgemäßen Halbzeugs für die Herstellung eines Segments für eine Außenwand eines Turms in perspektivischer Ansicht;
- Fig. 4: eine Querschnittsfläche eines Beton-Abschnitts in Längsrichtung;
- Fig. 5: ein erfindungsgemäßes Segment für eine Außenwand eines Turms in perspektivischer Ansicht;
- Fig. 6a: eine aus erfindungsgemäßen Segmenten aufgebaute Lage einer Außenwand eines erfindungsgemäßen Turms in einer Aufsicht;
- Fig. 6b: eine auf die in der Fig. 6a gezeigte Lage in der Höhe nachfolgende Lage aus erfindungsgemäßen Segmenten einer Außenwand eines erfindungsgemäßen Turms in einer Aufsicht;
- Fig. 7a: einen Abschnitt eines erfindungsgemäßen Turms in einer perspektivischen Darstellung von der Seite; und
- Fig-7b: eine Ausführungsform eines Segments, mit dem ein Turm gemäß Fig. 7a zumindest teilweise hergestellt werden kann.

Fig.1 zeigt in einer perspektivischen Darstellung ein erstes Ausführungsbeispiel eines erfindungsgemäßen Halbzeugs für die Herstellung eines Segments für eine Außenwand eines Turms. Das Halbzeug weist einen Beton-Abschnitt 1 auf, der eine Armierung beinhaltet. An den Beton-Abschnitt 1 schließt sich ein Abschnitt 2 an, in dem zumindest teilweise eine Armierung 3 exponiert ist. Die Armierung 3 ist aus dem Beton-Abschnitt herausgeführt oder nachträglich angeschlossen

Der Beton-Abschnitt ist in seiner Längserstreckung nicht geradlinig geformt und weist einen Winkel α auf. Die Armierung 3 des Abschnitts 2 erstreckt sich im Wesentlichen geradlinig aus dem Beton-Abschnitt in einer im Wesentlichen geradlinigen Verlängerung eines geradlinig (eben) ausgebildeten Bereichs des Beton-Abschnitts 1.

In Fig. 2 ist ein zweites Ausführungsbeispiel eines erfindungsgemäßen Halbzeugs dargestellt. Gemäß dieser Ausführungsform ist der Beton-Abschnitt 1 im Wesentlichen geradlinig ausgestaltet und die Armierung 3 tritt in einem Winkel α aus dem Beton-Abschnitt 1 aus.

In dem in Fig. 3 dargestellten Ausführungsbeispiel ist der Beton-Abschnitt gekrümmt geformt und die Armierung 3 des Abschnitts 2 tritt aus dem Beton-Abschnitt in einer Verlängerung parallel zu der Tangente des Endes des Beton-Abschnitts, aus dem die Armierung herausgeführt wird, heraus.

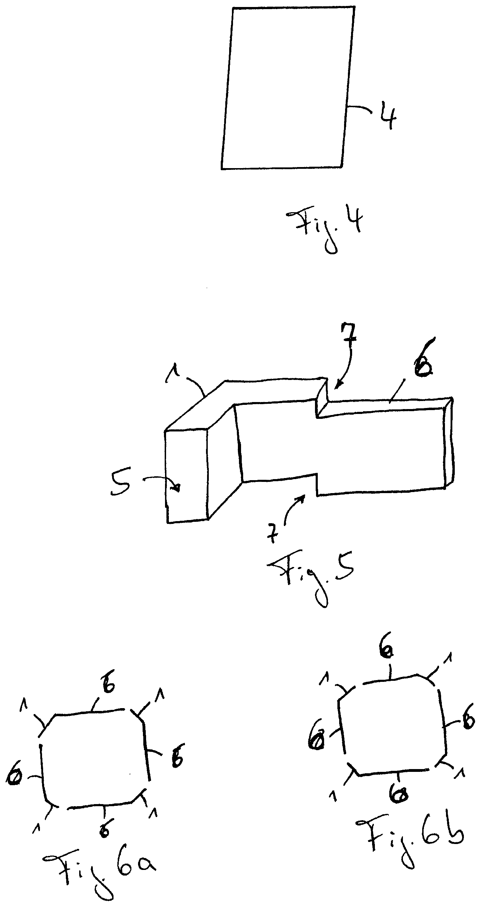

Den Ausführungsbeispielen der Fig. 1 und 3 ist gemeinsam, dass der Beton-Abschnitt eine Querschnittsfläche 4 bezogen auf die Längsrichtung des Beton-Abschnitts 1 hat, die eine Querschnittsfläche 4 in Form eines Trapezes aufweist, wie es in Fig. 4 dargestellt ist. In Fig. 4 ist das Trapez als Spezialform als langgestrecktes Parallelogramm dargestellt.

Ferner ist den in den Fig. 1 bis 3 dargestellten Ausführungsbeispielen der Halbzeuge gemeinsame, dass der Abschnitt 2 mit der Armierung 3 länger ist als der Beton-Abschnitt.

In Fig. 5 ist ein Segment in einer perspektivischen Ansicht dargestellt, dass aus einem Halbzeug gemäß dem in Fig. 1 dargestellten Ausführungsbeispiel hergestellt wurde. Strichpunktiert ist das Ende des Beton-Abschnitts 1 und des Abschnitts 2 dargestellt. Das Segment weist zwei Bereiche auf, die zu unterschiedlichen Zeitpunkten gehärteten Beton umfassen. Der eine Bereich ist der Beton-Abschnitt 1 und der andere Bereich ist der Abschnitt 6, der an den Beton-Abschnitt 1 angegossen wurde. Der Abschnitt 6 weist die zumindest teilweise exponierte Armierung 3 des Halbzeugs auf. Das Segment weist eine nicht ebene, nach unten gerichtete Auflagefläche auf, die im Wesentlichen parallel zu einer nach oben gerichteten Oberfläche ausgebildet ist. Bei dem in Fig. 5 dargestellten Beispiel eines Segments ist ein im Wesentlichen geradliniger Abschnitt vorhanden, an den sich ein Abschnitt anschließt, der ein Ende 5 umfasst, das aus der Ebene des im Wesentlichen geradlinigen Abschnitts versetzt ist. Ferner weist das Segment einen stufenartigen Versatz 7 auf. Der Versatz ist an der Auflagefläche des Segments und an der der Auflagefläche entgegengesetzt angeordneten Fläche gleich ausgebildet.

Mit den in den Figuren 2 und 3 dargestellten Ausführungsbeispielen von Halbzeugen können entsprechende Segmente gebildet werden, die den vorgefertigten Beton-Abschnitt 1 und den angegossenen Abschnitt 6 aufweisen.

In den Fig. 6a und 6b ist schematisch ein Schnitt durch einen erfindungsgemäßen Turm gezeigt, bei dem Segmente mit Abschnitten 1, 6 zur Ausbildung der Außenwand verwendet werden. Ein Umfang des Turms weist vier miteinander verbundene Segmente auf. Die vier Segmente bilden eine Lage, wobei in den Fig. 6a und 6b aufeinander liegende Lagen gezeigt sind. Die aufeinander liegenden Segmente sind in um 180° um eine Horizontale gedreht zueinander aufeinander gesetzt.

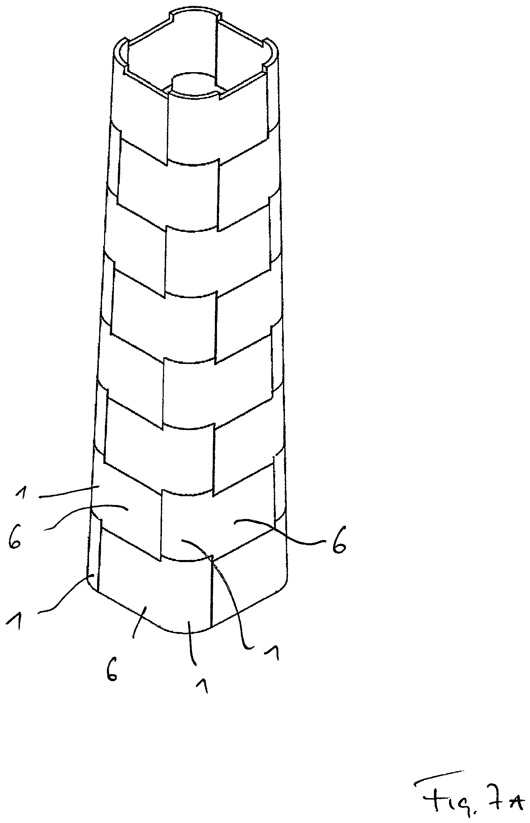

In Fig. 7a ist ein Abschnitt eines erfindungsgemäßen Turms in einer teilweisen Schnittdarstellung von der Seite gezeigt, in der eine Verzahnung von Segmenten mit Abschnitten 1, 6 aufeinanderfolgender Lagen erreicht ist. Dazu weisen die Segmente mindestens einen Versatz 7, wie er in Fig. 5 gezeigt ist, auf. Ersichtlich ist, dass in jeder der gezeigten Lagen des Turms gleiche Segmente verwendet werden, in der einer Lage folgenden Lage aber zu den Segmenten der ersten Lage spiegelbildliche Segmente verwendet werden.

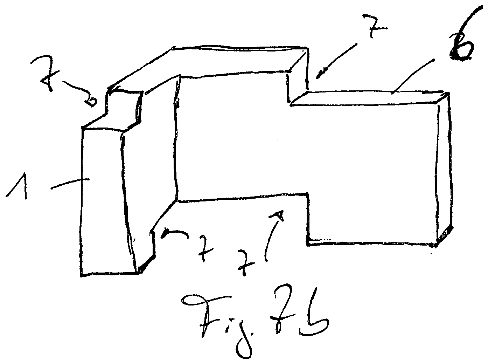

Das in der Fig. 7b dargestellte Segment weist zwei stufenartige Versätze 7 auf.

## Patentansprüche

1. Segment einer Außenwand eines Turms, das aus einem Halbzeug mit einem eine Armierung umfassenden, einen Abschnitt der Außenwand bildenden Beton-Abschnitt (1) und einem sich an den Beton-Abschnitt (1) anschließenden Abschnitt (2) in dem zumindest teilweise eine Armierung (3) exponiert ist, hergestellt wurde, wobei das Segment zwei Bereiche (1; 6) aufweist, die zu unterschiedlichen Zeitpunkten gehärteten Beton umfassen und das Segment eine nichtebene Auflagefläche in Form von mindestens zwei stufenförmig versetzten Auflageflächen aufweist.

2. Segment nach Anspruch 1, **dadurch gekennzeichnet, dass** der Beton-Abschnitt (1) in zumindest eine Richtung nicht geradlinig geformt ist.

3. Segment nach Anspruch 1 oder 2, **dadurch gekennzeichnet, dass** der Beton-Abschnitt (1) eine Querschnittsfläche (4) in Form eines Trapez aufweist.

4. Segment nach einem der Ansprüche 1 bis 3, **dadurch gekennzeichnet, dass** der Abschnitt (2) länger als der Beton-Abschnitt (1) ist.

5. Turm, aufweisend Segmente nach einem der Ansprüche 1 bis 4.

6. Turm nach Anspruch 5, **dadurch gekennzeichnet, dass** ein Bereich des Turms entlang der Längserstreckung des Turms mindestens 3 miteinander verbundene Segmente nach einem der Ansprüche 1 bis 4 aufweist.

7. Turm nach Anspruch 6, **dadurch gekennzeichnet, dass** aufeinanderliegende Segmente in Umfangsrichtung versetzt zueinander angeordnet sind.

8. Verwendung eines Turms nach einem der Ansprüche 5 bis 7 als Mast einer Windkraftanlage.

## Claims

1. Segment of an outer wall of a tower, manufactured from the pre-product with a concrete section (1) forming a section of the outer wall and comprising armouring, and a section (2) following on from the concrete section (1), in which an armouring (3) is at least partly exposed, wherein the segment has two areas (1; 6) comprising concrete cured at different times and the segment has a non-planar support surface in the form of at least two stepped offset support surfaces.

2. Segment according to claim 1, **characterised in that** the concrete section (1) is not formed straight in at least one direction.

3. Segment according to claim 1 or 2, **characterised in that** the concrete section (1) has a cross-section area (4) of the shape of a trapeze.

4. Segment according to one of the claims 1 to 3, **characterised in that** the section (2) is longer than the concrete section (1).

5. Tower, having segments according to one of the claims 1 to 4.

6. Tower according to claim 5, **characterised in that** an area of the tower has at least 3 segments according to one of the claims 1 to 4 that are connected with each other along the longitudinal expansion of the tower.

7. Tower according to claim 6, **characterised in that** segments lying on top of each other are arranged offset from each other.

8. Use of a tower according to one of the claims 5 to 7 as a mast of a wind turbine.

## Revendications

1. Segment d'une paroi extérieure d'une tour qui a été construit d'un produit semi-fini avec une section de béton (1) comportant une armature et constituant une partie de la paroi extérieure et d'une section (2) adjacente à la section de béton (1) dans laquelle est du moins en partie exposée une armature (3), le segment présentant deux zones (1 ; 6) comportant du béton durci à différents instants ainsi qu'une surface d'appui non-plane sous forme d'au moins deux surfaces d'appui décalées en gradins.

2. Segment selon la revendication 1, **caractérisé en ce que** la section de béton (1) n'a pas une forme rectiligne dans au moins une direction.

3. Segment selon la revendication 1 ou 2, **caractérisé en ce que** la section de béton (1) présente une section transversale (4) sous forme d'un trapèze.

4. Segment selon l'une des revendications 1 à 3, **caractérisé en ce que** la section (2) est plus longue que la section de béton (1).

5. Tour comportant des segments selon l'une des revendications 1 à 4.

6. Tour selon la revendication 5, **caractérisé en ce qu'**une zone de la tour le long de l'extension longitudinale de la tour comporte au moins 3 segments liés l'un avec l'autre selon l'une des revendications 1 à 4.

7. Tour selon la revendication 6, **caractérisé en ce que** des segments superposés sont décalés les uns par rapport aux autres dans le sens de la circonférence.

8. Utilisation d'une tour selon l'une des revendications 5 à 7 en tant que pylône d'une éolienne.
